# EUROPEAN PATENT SPECIFICATION

(11) **EP 2 309 633 B1**
(45) Date of publication and mention of the grant of the patent: **27.03.2019**
(21) Application number: 09800227.2
(22) Date of filing: 23.07.2009
(51) Int. Cl.: H02M 5/293, H02M 5/297

(54) **ELECTRIC POWER CONVERTER**
STROMWANDLER
CONVERTISSEUR DE COURANT ÉLECTRIQUE

(30) Priority: 24.07.2008 JP 2008190579
(43) Date of publication of application: 13.04.2011
(60) Divisional application: 17151960.6
(73) Proprietor: Panasonic Corporation, Kadoma-shi Osaka 571-8501 (JP)
(72) Inventor: OGAWA, Masanori, Osaka-shi Osaka 540-6207 (JP); MATSUSHIRO, Hideo, Osaka-shi Osaka 540-6207 (JP); FUKUE, Takashi, Osaka-shi Osaka 540-6207 (JP)
(74) Representative: Eisenführ Speiser
(86) International application number: PCT/JP2009/003472
(87) International publication number: WO 2010/010711

(56) References cited:
- JP-A- 9 089 946
- JP-A- 2001 069 759
- JP-A- 2001 309 660
- JP-A- 2005 006 478
- JP-A- 2005 045 912
- JP-A- 2005 045 912
- JP-A- 2008 005 609
- CITTADINI R ET AL: "A MATRIX COVERTER SWITCHING CONTROLLER FOR LOW LOSSES OPERATION WITHOUT SNUBBER CIRCUITS", EPE '97. 7TH. EUROPEAN CONFERENCE ON POWER ELECTRONICS AND APPLICATIONS. TRONDHEIM, SEPT. 8 - 10, 1997; [EPE . EUROPEAN CONFERENCE ON POWER ELECTRONICS AND APPLICATIONS], BRUSSELS, EPE ASSOCIATION, B, vol. 4, 8 September 1997 (1997-09-08), pages 4199-4203, XP000768142, ISBN: 978-90-75815-02-3
- ZIEGLER M ET AL: "PERFORMANCE OF A TWO STEPS COMMUTATED MATRIX CONVERTER FOR AC-VARIABLE-SPEED DRIVES", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, vol. CONF. 8, 7 September 1999 (1999-09-07), pages 1-09, XP000878431, ISBN: 978-90-75815-04-7
- EMPRINGHAM L ET AL: "BI-DIRECTIONAL SWITCH COMMUTATION FOR MATRIX CONVERTERS", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, vol. CONF. 8, 7 September 1999 (1999-09-07), pages 1-10, XP000890280, ISBN: 978-90-75815-04-7
- MORITA T ET AL: "650 V 3.1 mÎ CR cm2 GaN-based monolithic bidirectional switch using normally-off gate injection transistor", ELECTRON DEVICES MEETING, 2007. IEDM 2007. IEEE INTERNATIONAL, IEEE, PISCATAWAY, NJ, USA, 10 December 2007 (2007-12-10), pages 865-868, XP031507604, ISBN: 978-1-4244-1507-6
- 'Electron Devices Meeting, 2007. IEDM 2007', vol. 2, 2007, IEEE INTERNATIONAL article TATSUO MORITA ET AL.: '650V 3.lmQcm2 GaN-based Monolithic Bidirectional Switch Using Normally-off Gate Injection Transistor', pages 865 - 868, XP031507604

## Description

### TECHNICAL FIELD

The present invention relates to a power conversion apparatus that outputs a multi-phase alternate current (AC) having a predetermined frequency from a single-phase AC power supply.

### BACKGROUND ART

As a conventional power conversion apparatus, a drive controlling apparatus of a synchronous motor, which uses a matrix converter for directly generating a three-phase AC having a predetermined voltage/frequency from a three-phase AC power supply without through a direct current (DC) stage, is disclosed in Japanese Unexamined Patent Publication No. H11-018489 (Patent Literature 1).

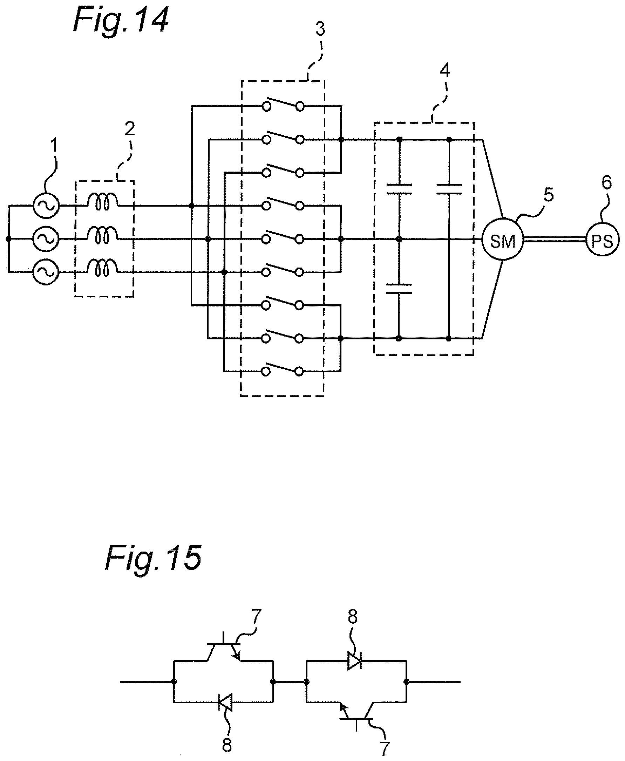

Fig. 14 is a circuit diagram showing a configuration of the drive controlling apparatus as a power conversion apparatus which was disclosed in Japanese Unexamined Patent Publication No. H11-018489. As shown in Fig. 14, this drive controlling apparatus performs operations of opening/closing a switching device in a switching means 3 based upon PWM control in order to form, from a three-phase AC inputted from a three-phase AC power supply 1, a three-phase AC with a predetermined frequency for driving a synchronous motor 5. In the drive controlling apparatus shown in Fig. 14, a reactor 2 is provided in each phase on the input side for improving a current waveform of the three-phase AC power supply 1, and a capacitor 4 is provided between each phase for improving a voltage waveform to be inputted into the synchronous motor 5. Further, the synchronous motor 5 is provided with a position sensor 6.

The switching device in the switching means 3 used in the conventional drive controlling apparatus configured as thus described is a bidirectional switching device shown in Fig. 15, and is configured by serial connection of parallel bodies each formed by parallel connection of a power transistor 7 and a diode 8. A typical bidirectional switch device forms the formation of two each of transistors and diodes in combination.

In the conventional drive controlling apparatus configured as thus described, each of the bidirectional switching devices in the switching means 3 is PWM controlled, and thereby, the three-phase AC inputted from the three-phase AC power supply 1 is formed into the three-phase AC with a predetermined frequency for driving the synchronous motor 5.

Further, as the bidirectional switching device, there is present a switching device shown in Fig. 16. Fig. 16 shows an AC switching module disclosed in Japanese Unexamined Patent Publication No. 2007-252029 (Patent Literature 2).

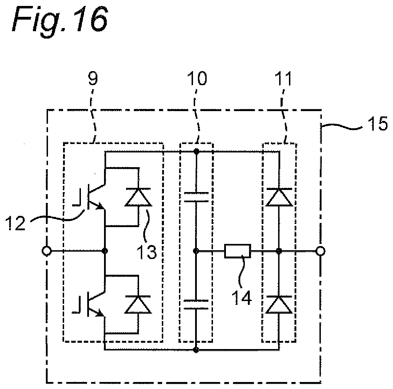

In the AC switching module shown in Fig. 16, a switching part 9, a capacitor part 10 and a diode part 11 are provided, and these are all connected in parallel. The switching part 9 is configured having switching devices 12 each with a circulation diode 13 built therein, and the two switching devices 12 are connected in series in a forward direction. The capacitor part 10 is configured connecting two snubber capacitors in series, and the diode part 11 is configured connecting two diodes in series in the forward direction. Further, a resistor 14 is connected to between a midpoint of the capacitor part 10 and a midpoint of the diode part 11. It is to be noted that a direction of a current flowing through each diode of the diode part 11 agrees with a direction of a current flowing through a switching element of the switching part 9.

In the AC switching module shown in Fig. 16 configured as thus described, a terminal connected to the midpoint of the switching part 9 is used as an input terminal, and a terminal connected to the midpoint of the diode part 11 is used as an output terminal. In this AC switching module, the switching device 12 is configured by parallel connection of a transistor as the switching element and the diode 13, to form a circuit configuration where energy stored in the capacitor part 10 as a snubber circuit can be regenerated to the power supply side or the load side by ON/OFF operations of the switching device 12.

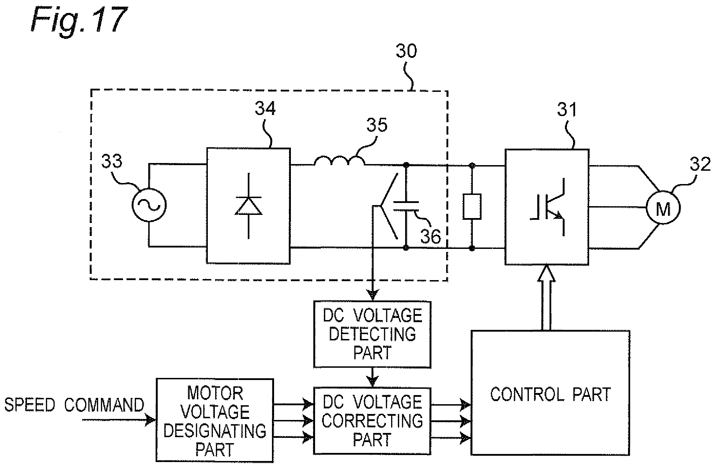

As the conventional power conversion apparatus where a single-phase AC power supply is inputted to generate a three-phase AC, there is present an inverter control apparatus disclosed in Japanese Unexamined Patent Publication No. 2004-289985 (Patent Literature 3). Fig. 17 is a constitutional diagram showing the conventional inverter control apparatus. In the conventional inverter control apparatus shown in Fig. 17 is one where a single-phase AC power is inputted from a single-phase AC power supply 33 to generate a three-phase AC power so as to drive a motor 32 as an induction motor. This inverter control apparatus is configured of a DC power supply apparatus 30 having the single-phase AC power supply 33 and an inverter 31. The DC power supply apparatus 30 is configured of the single-phase AC power supply 33, a rectification circuit 34 for converting AC to a DC, a capacitor 36 for absorbing regenerated energy of the motor 32, and a reactor 35.

Accordingly, the above conventional inverter control apparatus is a power conversion apparatus having the rectification circuit 34 as a rectification means, and is an indirect matrix converter from single-phase AC input to DC conversion and to three-phase AC output. This inverter control apparatus is configured such that, even when a DC voltage inputted into the inverter 31 has a pulsating voltage waveform in an almost full-wave rectifying state, a DC voltage value inputted into the inverter 31 is detected and processed, to operate the motor 32 in a stable and practically non-problematic manner.
Further power conversion apparatuses are known in the art. Patent Literature 4 discloses a power conversion apparatus comprising a voltage detector, which detects whether the voltage of a single-phase AC power source is positive or negative, and a control signal regenerator, which outputs twelve control signals for bidirectional switching circuits from the six output signals of a DC power controller. Non-Patent Literature 2 to 4 describe different embodiments of bidirectional switches usable in power conversion apparatuses.
[Patent Literature 1] Japanese Unexamined Patent Publication No. H11-018489
[Patent Literature 2] Japanese Unexamined Patent Publication No. 2007-252029
[Patent Literature 3] Japanese Unexamined Patent Publication No. 2004-289985
[Non Patent Literature 1] "650V 3.1mΩcm2 GN-based Monolithic Bidirectional Switch Using Normally-off Gate Injection Transistor", Tatsuo Morita et al. (Electron Devices Meeting, 2007. IEDM 2007. IEEE International; p865-868)
[Patent Literature 4] Japanese Unexamined Patent Publication No. 2005-045912
[Non Patent Literature 2]" A matrix converter switching controller for low losses operation without snubber circuits", R. Cittadini, J-J. Huselstein, C. Glaize, EPE European conference on power electronics and applications, Brussels, EP ES Association, B, vol. 4, 8 September 1997, pages 4199-4203, XP000768142, ISBN: 978-90-75815-02-3
[Non Patent Literature 3] "Performance of a 2 steps, mutated matrix converter for AC-variable-speed drives", Ziegler, M. et al, EPE, European conference on power electronics and applications, EPE Association, Brussels, BE, vol. CONF. 8, 7 September 1999" pages 1-09, XP000878431 , ISBN: 978-90-75815-04-7
[Non Patent Literature 4] "Bi-directional switch communication for matrix converters", Empringham, L. Et al, EPE, European conference on power electronics and applications, EPE Association, Brussels, BE, vol. CONF. 8, 7 September 1999, pages 1-10, XP000890280, ISBN: 978-90-75815-04-7

### DISCLOSURE OF INVENTION

### PROBLEMS TO BE SOLVED BY THE INVENTION

As thus described, as shown in Figs. 14 to 16, in the conventional power conversion apparatus using the matrix converter for directly generating the three-phase AC having a predetermined voltage/frequency from the three-phase AC power supply without through the DC stage, a plurality of bidirectional switching devices are configured of the transistors and the diodes. In the conventional power conversion apparatus as thus configured, a current in the main circuit constantly flows to the transistor and the diode of the bidirectional switching device, to form a three-phase AC. There has thus been a problem with the conventional power conversion apparatus in that flowing of a current to the transistor and the diode causes an energy loss such as heat generation, leading to deterioration in efficiency.

Further, as shown in Fig. 17, the conventional power conversion apparatus where the single-phase AC power supply is inputted to generate the three-phase AC is an indirect matrix converter from single-phase AC input to DC conversion and to three-phase AC output, and the rectification means is an essential constitutional element. Further, when the induction motor is in use as the load, a means for absorbing its regenerated energy is required. In the power conversion apparatus, where the single-phase AC power supply is inputted to generate a three-phase AC, there has thus been a problem in that its structure becomes complex, to increase the size of the apparatus.

Accordingly, the present inventor focused attention on the high usefulness of forming, with a simple configuration, a direct matrix converter from single-phase AC input to three-phase AC output without provision of a rectification means, and realized the present invention.

Namely, an object of the present invention is to provide a power conversion apparatus forming with a simple configuration a direct matrix converter from single-phase AC input to three-phase AC output, without provision of a rectification means.

### MEANS FOR SOLVING THE PROBLEMS

A power conversion apparatus according to a first aspect of the present invention includes:
a power supply phase detecting part for detecting a voltage phase and a current phase of a single-phase alternate current (AC) power supply, to output information on the detected power supply phase;
a waveform generating part, having a plurality of bidirectional switching devices and configured by connection of a power supply line of the single-phase AC power supply and an output line to a multi-phase load through the bidirectional switching device; and
a waveform generation controlling part for drive-controlling the bidirectional switching device based upon the information on the detected voltage phase and information on the detected current phase supply from the power supply phase detecting part, and also PWM-controlling the bidirectional switching device based upon a previously set command signal, to make a multi-phase AC with a predetermined frequency outputted from the waveform generating part. The waveform generation controlling part drive-controls the bidirectional switching device to a mode for circulating a current from a multi-phase AC load into the multi-phase AC load based upon the voltage phase information and the current phase information from the power supply phase detecting part during a period of positive and negative regions being different between a power supply voltage waveform and a power supply current waveform. In the power conversion apparatus of the present invention as thus configured, it is possible to form, with a simple configuration, a direct matrix converter from single-phase AC input to three-phase AC output, without provision of a rectification means.

The power conversion apparatus according to a second aspect of the present invention may be configured such that, in the power conversion apparatus according to the first aspect,
the bidirectional switching device has, as operational modes, a switching mode for switching between a cut-off state and a bidirectional current-carrying state, and a diode mode for leading to a unidirectional current-carrying state in each of two directions, and
the waveform generation controlling part alternatively switches between the switching mode and the diode mode of the bidirectional switching device based upon the power supply phase information from the power supply phase detecting part. In the power conversion apparatus of the present invention as thus configured, a desired multi-phase AC can be generated only by performing drive-control on the bidirectional switching device of the waveform generating part, which eliminates the need for particular corresponding control on another circuit, thereby allowing simplification and size reduction of the circuit configuration to be sought. Further, in the power conversion apparatus of the present invention, the need is eliminated for providing the bidirectional switching device of the waveform generating part with a particular protection circuit aimed at processing regenerated energy, thereby allowing further simplification and size reduction of the circuit configuration to be sought. Moreover, in the power conversion apparatus of the present invention, performing determination on a switching operation of the diode mode based upon a state of the power supply or power supply phase information can facilitate control of a regenerated energy processing circuit, so as to realize a highly reliable power conversion apparatus.

The power conversion apparatus according to a third aspect of the present invention may be configured such that, in the power conversion apparatus according to the first aspect,
the bidirectional switching device has at least two control terminals, and
the waveform generation controlling part detects a zero crossing point of a positive region and a negative region in a power supply waveform based upon the power supply phase information from the power supply phase detecting part, and switches respective control signals that are inputted into the two control terminals at the detected zero crossing point. In the power conversion apparatus of the present invention as thus configured, alternatively drive-controlling the bidirectional switching device of the waveform generating part based upon information on the detected power supply phase can facilitate output of a predetermined multi-phase AC power.

The power conversion apparatus according to a fourth aspect of the present invention may be configured such that, in the power conversion apparatus according to the second aspect, the waveform generation controlling part detects a zero crossing point of a positive region and a negative region in a power supply waveform based upon the power supply phase information from the power supply phase detecting part, and switches a current-carrying direction of the diode mode of the bidirectional switching device at the detected zero crossing point. In the power conversion apparatus of the present invention as thus configured, the regenerated energy processing circuit can be realized by an operation of switching the current-carrying direction of the diode mode, so as to realize a highly reliable power conversion with a simple configuration.

The power conversion apparatus according to a fifth aspect of the present invention may be configured such that, in the power conversion apparatus according to the first aspect, the waveform generation controlling part PWM-controls the bidirectional switching device based upon the voltage phase information and the current phase information from the power supply phase detecting part during a period of positive and negative regions being the same between a power supply voltage waveform and a power supply current waveform. In the power conversion apparatus of the present invention as thus configured, performing PWM-control on the bidirectional switching device based upon information on the voltage phase and on the current phase of the power supply can reliably generate a predetermined multi-phase AC power, so as to realize a highly reliable power conversion apparatus.

The power conversion apparatus according to a sixth aspect of the present invention may be configured such that, in the power conversion apparatus according to the first aspect, the bidirectional switching device is configured by parallel connection of SiC lateral bidirectional switch transistors, GaN lateral bidirectional switch transistors, or RB-IGBTs (Reverse Blocking Insulated Gate Bipolar Transistors) in a reverse direction. In the power conversion apparatus of the present invention as thus configured, it is possible to readily and reliably perform drive-control on the bidirectional switching device, so as to realize a highly reliable power conversion apparatus.

### EFECT OF THE INVENTION

The present invention can provide a power conversion apparatus capable of directly forming a multi-phase AC from a single-phase AC power supply without through a DC stage, and also provide a power conversion apparatus capable of realizing control facility and a low loss.

### BRIEF DESCRIPTION OF DRAWINGS

Fig. 1 is a block diagram showing a configuration of a power conversion apparatus according to Example 1 helpful to understand the present invention;
Fig. 2 is a circuit diagram showing a bidirectional switching device for use in a waveform generating part in the power conversion apparatus of Example 1;
Fig. 3 is a diagram explaining an operation of the bidirectional switching device shown in Fig. 2;
Fig. 4 is a circuit diagram showing a main configuration of the waveform generating part in the power conversion apparatus of Example 1;
Fig. 5A is a table showing an example of operations of each of the bidirectional switching devices when a voltage of a single-phase AC power supply is in a positive region;
Fig. 5B is a table showing an example of operations of each of the bidirectional switching devices when the voltage of the single-phase AC power supply is in a negative region;
Fig. 6A is a table showing an example of operations at the time of the bidirectional switching device being under PWM control when the voltage of the single-phase AC power supply is in the positive region;
Fig. 6B is a diagram showing a current flow in the waveform generating part in the operation state shown in Fig. 6A;
Fig. 7A is a table showing an example of an operation at the time of the bidirectional switching device being under PWM control when the voltage of the single-phase AC power supply is in the positive region;
Fig. 7B is a diagram showing a current flow in the waveform generating part in the operation state shown in Fig. 7A;
Fig. 8A is a circuit diagram showing an example of the bidirectional switching devices for use in the waveform generating part;
Fig. 8B is a diagram explaining an operation of the bidirectional switching device shown in Fig. 8A;
Fig. 9 is a block diagram showing a configuration of a power conversion apparatus of Example 2 helpful to understand the present invention;
Fig. 10 is a block diagram showing a configuration of a power conversion apparatus of Example 3 helpful to understand the present invention;
Fig. 11 is a block diagram showing a configuration of a power conversion apparatus of Embodiment 1 according to the present invention;
Fig. 12 is a waveform diagram showing an operation period of a zero-vector current mode by use of an example of each of a voltage waveform V and a current waveform I which are inputted from a single-phase AC power supply in the power conversion apparatus of Embodiment 1;
Fig. 13A is a table showing an example of operations of a bidirectional switching device in a zero-vector current mode in the power conversion apparatus of Embodiment 1;
Fig. 13B is a diagram showing a current flow in a waveform generating part in the case of the operation state shown in Fig. 13A;
Fig. 14 is the circuit diagram showing the configuration of the conventional power conversion apparatus;
Fig. 15 is the circuit diagram showing the configuration of the conventional bidirectional switching device;
Fig. 16 is the circuit diagram showing the configuration of the conventional bidirectional switching device; and
Fig. 17 is the block diagram showing the configuration of the conventional inverter control apparatus.

### EXPLANATION OF REFERENCE NUMERALS

20: Switch-drive controlling part
21: Phase detection signal processing part
22: PWM-controlling part
100: Single-phase AC power supply
101: Load
102: Waveform generating part
103: Power supply phase detecting part
104: Waveform generation controlling part
105: Number-of-revolutions detecting part
106: Voltage phase detecting part
107: Current phase detecting part
108: Voltage/current phase detecting part

### BEST MODE FOR CARRYING OUT THE INVENTION

In the following, examples helpful to understand the invention and preferred embodiments according to the power conversion apparatus of the present invention are described with reference to attached drawings. In addition, it goes without saying that embodiments with specific configurations described below do not restrict a configuration of the present invention, and a power conversion apparatus configured based upon the same technical concept is included in the present invention.

### Example 1

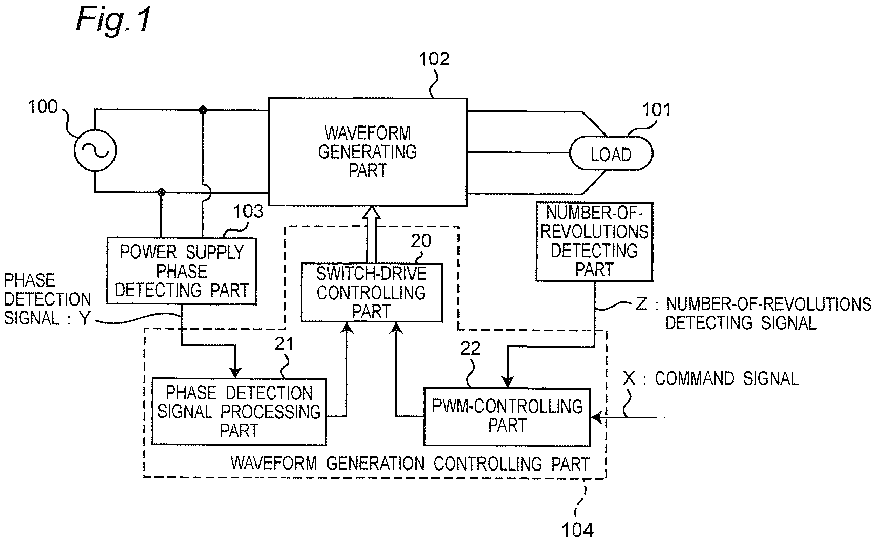

Fig. 1 is a block diagram showing a configuration of a power conversion apparatus of Example 1 helpful to understand the present invention. As shown in Fig. 1, the power conversion apparatus of Example 1 directly forms a three-phase AC having a predetermined frequency from a single-phase AC of a single-phase AC power supply 100, to supply a three-phase power to a load 101.

In Fig. 1, it is configured that the single-phase AC from the single-phase AC power supply 100 is inputted into a waveform generating part 102, and a phase of a power supply voltage outputted from the single-phase AC power supply 100 is detected by a power supply phase detecting part 103. In the waveform generating part 102, the power generated to be the predetermined three-phase AC is supplied to the load 101. In Example 1, the load 101 is a motor as an induction load. As described later, the waveform generating part 102 is configured of a plurality of bidirectional switching devices, and is a direct matrix converter where the single-phase AC is converted to the three-phase AC without through a DC stage. The plurality of bidirectional switching devices in the waveform generating part 102 are drive-controlled by a waveform generation controlling part 104. The waveform generation controlling part 104 is configured to drive-control the plurality of bidirectional switching devices in the waveform generating part 102 based upon a previously set command signal X, a phase detection signal Y from the power supply phase detecting part 103, a number-of-revolutions detecting signal Z from a number-of-revolutions detecting part 105 for detecting the number of revolutions as an operational state of the load 101, and the like, so as to generate a predetermined three-phase AC power to be inputted into the load 101 by the waveform generating part 102. Here, the phase detection signal Y from the power supply phase detecting part 103 is the power supply phase information.

It is to be noted that in the power conversion apparatus of Example 1, the waveform generation controlling part 104 is described as having a configuration where information on the number of revolutions is inputted as information showing a load state of the motor as the load 101, but as the information showing the load state may be a variety of information, such as a voltage and a current in a resistance load, and an input current to the motor, a phase current of the motor, an output torque, a position of a rotor, and an angular rate in the induction load. The load 101 can be controlled so as to come into a previously set state based upon these pieces of information.

The waveform generation controlling part 104 includes: a phase detection signal processing part 21 into which the phase detection signal Y is inputted; a PWM-controlling part 22 into which the command signal X and the number-of-revolutions detecting signal Z are inputted; and a switch-drive controlling part 20 that drive-controls the plurality of bidirectional switching devices in the waveform generating part 102. The switch-drive controlling part 20 receives input of the respective signals from the phase detection signal processing part 21 and the PWM-controlling part 22, to output a control signal for drive-controlling the plurality of bidirectional switching devices in the waveform generating part 102.

In the phase detection signal processing part 21 of the waveform generation controlling part 104, the inputted phase detection signal Y is subjected to correction of a timing synchronous delay thereof in consideration of a delay corresponding to an offset which occurs at the time of detecting a voltage phase in the power supply phase detecting part 103, a signal delay in the configuration circuit, and the like.

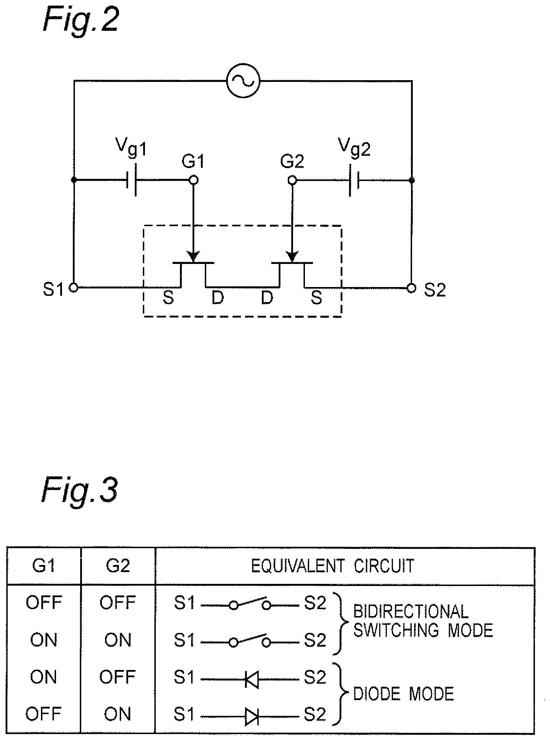

As the bidirectional switching device in the waveform generating part 102, a switching device shown in Fig. 2 can be used. The bidirectional switching device shown in Fig. 2 is a GaN lateral bidirectional switching transistor having two gate terminals as control terminals, and has a function of coming into four states: a cut-off state (OFF state), a bidirectional current-carrying state (bidirectional ON state), and two unidirectional current-carrying states in reverse directions. The bidirectional switching device having such a function may, for example, be one disclosed in the above-mentioned Non Patent Literature 1.

As shown in Fig. 2, the GaN lateral transistor has two gate terminals (G1, G2), and the transistor performs operations showing different functions in accordance with signals inputted into the respective gate terminals. It is to be noted that the SiC lateral bidirectional switching transistor may be used in place of the GaN lateral bidirectional switching transistor.

Fig. 3 is a table showing an operation of the GaN lateral bidirectional switching transistor by means of an equivalent circuit by applying a voltage to each of the gate terminals (G1, G2) of the transistor. As shown in Fig. 3, when the voltage is applied to neither the first gate terminal G1 nor the second gate terminal G2 (when both the gate terminals G1, G2 are in the OFF state), the transistor is in the OFF state (opened state). On the other hand, when the voltage is applied to both the first gate terminal G1 and the second gate terminal G2 (when both the gate terminals G1, G2 are in the ON state), the transistor is in the ON state (closed state).

When the voltage is applied to the first gate terminal G1 and is not applied to the second gate terminal G2, namely, when the first gate terminal G1 is in the ON state and the second gate terminal G2 is in the OFF state, the transistor comes into the diode mode, in which a first source S1 becomes the cathode side and a second source S2 becomes the anode side. Namely, a current flow from the second source (S2) to the first source (S1) is a forward operation. On the other hand, when the voltage is not applied to the first gate terminal G1 and is applied to the second gate terminal G2, namely, when the first gate terminal G1 is in the OFF state and the second gate terminal G2 is in the ON state, the transistor comes into the diode mode, in which the first source S1 becomes the anode side and the second source S2 becomes the cathode side. Namely, a current flow from the first source (S1) to the second source (S2) is a forward operation.

In the power conversion apparatus of Example 1, with the use of the GaN lateral bidirectional switching transistor that performs such an operation as above as the bidirectional switching device in the waveform generating part 102, the waveform generating part 102 can convert the single-phase AC to the predetermined three-phase AC.

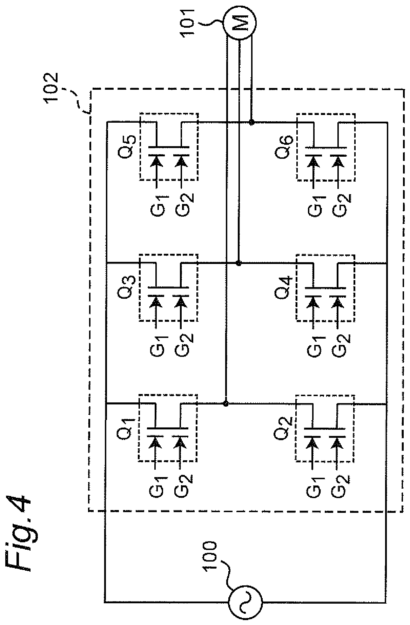

Fig. 4 is a circuit view showing a main circuit configuration in the waveform generating part 102 of the power conversion apparatus. As shown in Fig. 4, the waveform generating part 102 is provided with six bidirectional switching devices (Q1 to Q6). In the waveform generating part 102, three serial bodies are present each formed of two bidirectional switching devices connected in series, and the three serial bodies are connected in parallel. It is configured that the three-phase AC having a predetermined frequency is outputted from the midpoint of each serial body (connecting point of two bidirectional switching devices) to the motor as the load 101. A control signal from the switch-drive controlling part 20 is inputted into the two gate terminals (G1, G2) of each of the bidirectional switching devices (Q1 to Q6).

In the power conversion apparatus of Example 1, an applied voltage to each of the gate terminals of the bidirectional switching devices (Q1 to Q6) in the waveform generating part 102 is controlled in accordance with a phase state of a power supply voltage from the single-phase AC power supply 100. Namely, in the power conversion apparatus of Example 1, it is configured such that a direction of a current flow in each of the transistors constituting the bidirectional switching devices (Q1 to Q6) is switched between the time when a waveform of a voltage inputted from the single-phase AC power supply 100 is in the positive region and the time when the waveform of the voltage is in the negative region. In the following, specific operations in the bidirectional switching devices (Q1 to Q6) of the waveform generating part 102 are described.

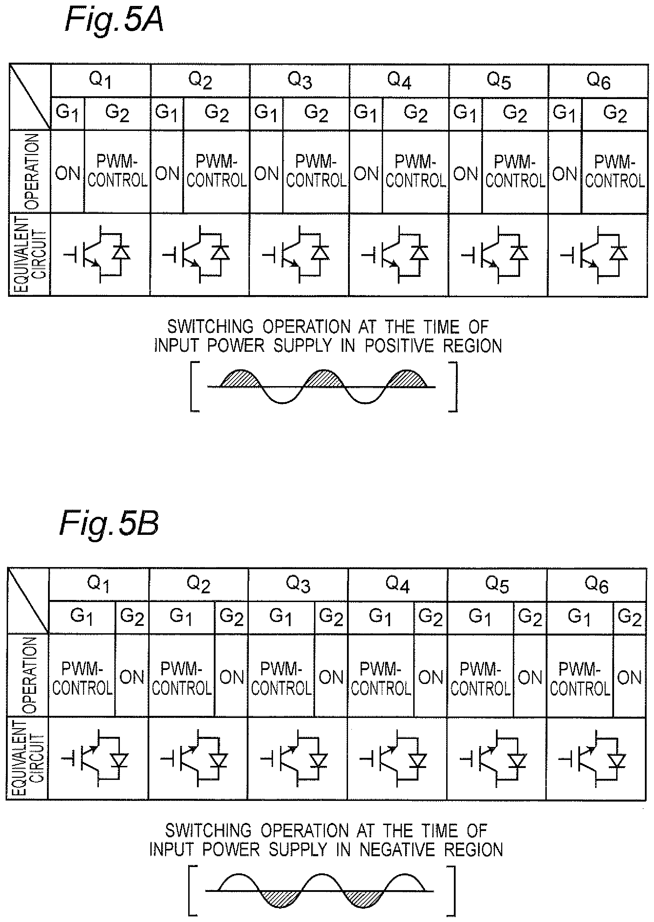

Fig. 5A is a table showing operations of the bidirectional switching devices (Q1 to Q6) at the time when the voltage inputted from the single-phase AC power supply 100 is in the positive region. As shown in Fig. 5A, when the voltage of the single-phase AC power supply 100 is in the positive region, an ON voltage is applied to the first gate terminal G1 of each of the bidirectional switching devices (Q1 to Q6), and the first gate terminal G1 is thus in the ON state. At this time, the second gate terminal G2 in each of the bidirectional switching devices (Q1 to Q6) is drive-controlled by means of a control signal for the PWM-control based upon the command signal X and the number-of-revolutions detecting signal Z. Namely, in the waveform generating part 102, for generating the three-phase AC having a predetermined frequency from the single-phase AC of the single-phase AC power supply 100, the second gate terminal G2 is ON/OFF-controlled with a predetermined duty ratio. Fig. 5A shows an equivalent circuit of each of the bidirectional switching devices at the time when the first gate terminal G1 is in the ON state and the second gate terminal G2 is PWM-controlled.

Fig. 5B is a table showing operations of the bidirectional switching devices (Q1 to Q6) at the time when the voltage inputted from the single-phase AC power supply 100 is in the negative region. As shown in Fig. 5B, when the voltage of the single-phase AC power supply 100 is in the negative region, an ON voltage is applied to the second gate terminal G2 of each of the bidirectional switching devices (Q1 to Q6), and the second gate terminal G2 is thus in the ON state. At this time, the first gate terminal G1 in each of the bidirectional switching devices (Q1 to Q6) is drive-controlled by means of the control signal for the PWM-control based upon the command signal X and the number-of-revolutions detecting signal Z. Namely, in the waveform generating part 102, for generating the three-phase AC having a predetermined frequency from the single-phase AC of the single-phase AC power supply 100, the first gate terminal G1 is ON/OFF-controlled with a predetermined duty ratio. Fig. 5B shows an equivalent circuit of each of the bidirectional switching devices at the time when the first gate terminal G1 is PWM-controlled and the second gate terminal G2 is in the ON state.

As shown in the equivalent circuits in Figs. 5A and 5B, it is configured such that the functional operation of each of the bidirectional switching devices (Q1 to Q6) is reversed between the time when the voltage of the single-phase AC power supply 100 is in the positive region and the time when the voltage is in the negative region. Therefore, in the power conversion apparatus of Example 1, a direct matrix converter is configured which directly converts the single-phase AC to the three-phase AC without through the DC stage.

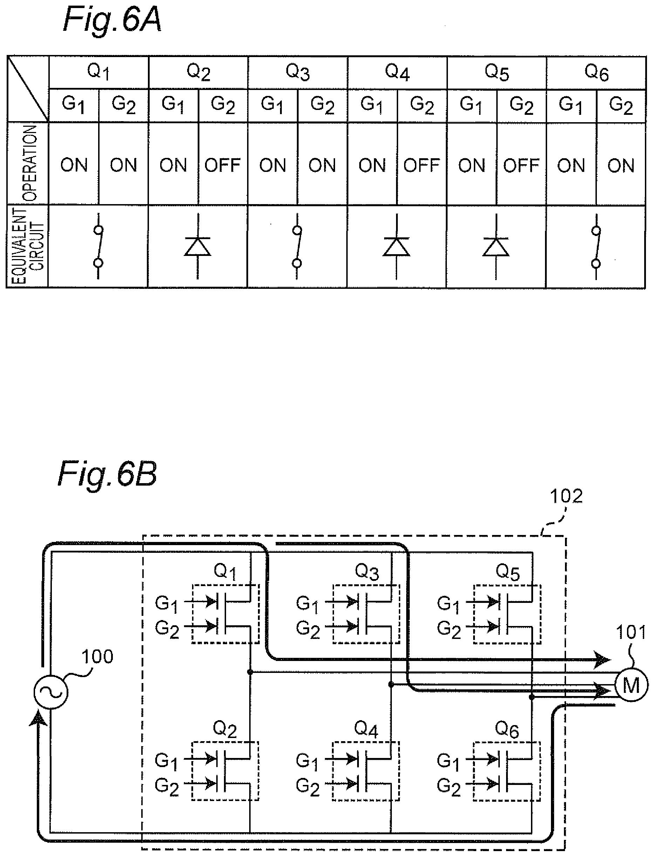

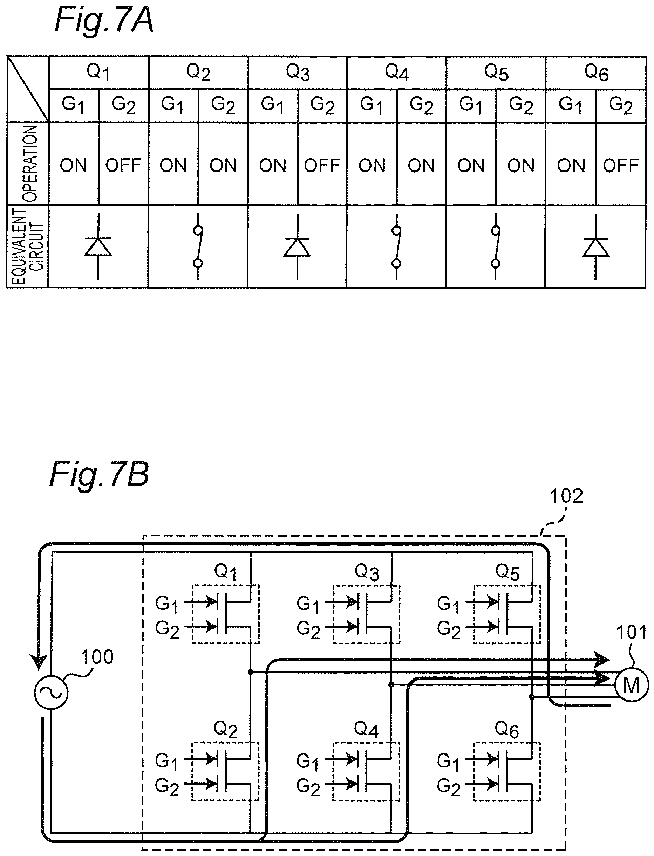

Figs. 6A, 6B, 7A and 7B are tables each showing an operation at the time of the bidirectional switching devices (Q1 to Q6) being under PWM-control when the voltage of the single-phase AC from the single-phase AC power supply 100 is in the positive region.

Figs. 6A and 6B show a state where a current from the single-phase AC power supply 100 flows into the motor and the motor as the load 101 is driven (powering state). In the PWM-control in the state (powering state) shown in Figs. 6A and 6B, the first, third and sixth bidirectional switching devices Q1, Q3, Q6 are in a state where the switching mode is ON, and the second, fourth and fifth bidirectional switching devices Q2, Q4, Q5 are in the diode mode. In this state, the current from the single-phase AC power supply 100 flows in a direction of arrows shown in Fig. 6B, to drive the load 101 (powering mode).

Figs. 7A and 7B show the state of braking the load 101 (decelerating state), and in this braking state, the motor as the induction load serves as a power generator. In the braking state shown in Figs. 7A and 7B, the second, fourth and fifth bidirectional switching devices Q2, Q4, Q5 are in the state where the switching mode is ON, and the first, third and sixth bidirectional switching devices Q1, Q3, Q6 are in the diode mode. In this state, the current from the motor as the induction load flows in a direction of arrows shown in Fig. 7B, (circular current mode).

On the other hand, in the PWM-control of the bidirectional switching devices (Q1 to Q6) at the time when the voltage of the single-phase AC from the single-phase AC power supply 100 is in the negative region, the second gate terminal G2 of each of the bidirectional switching devices (Q1 to Q6) is in the ON state, and the first gate terminal G1 is PWM-controlled.

As thus described, in the power conversion apparatus of Example 1, the first and second gate terminals (G1, G2) of each of the bidirectional switching devices (Q1 to Q6) are controlled, thereby to allow direct conversion from the single-phase AC to the three-phase AC having a predetermined frequency without through the DC stage.

It is to be noted that in Example 1, although the description was given by means of an example where the GaN lateral bidirectional switching transistor shown in Fig. 2 is used as each of the bidirectional switching devices (Q1 to Q6), another device having a similar function can also apply.

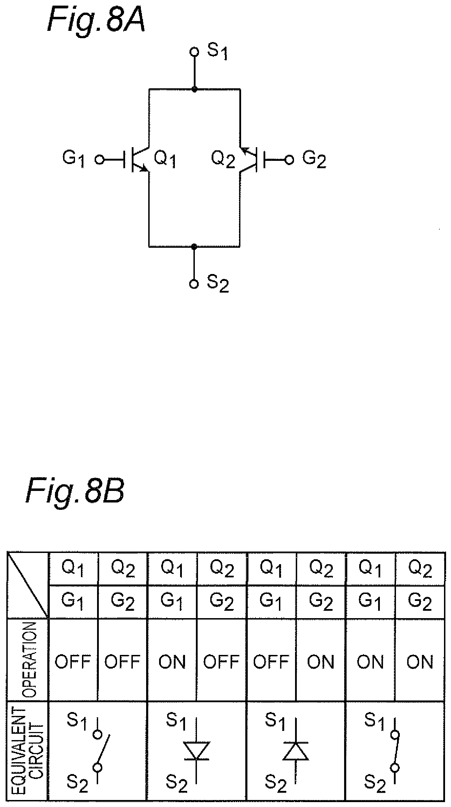

For example, it is possible to use the bidirectional switching device shown in Fig. 8A. This bidirectional switching device is configured by parallel connection of RB-IGBTs (Reverse Blocking Insulated Gate Bipolar Transistors) in a reverse direction. The use of this RB-IGBT as the bidirectional switching device can reduce the number of elements of a current circuit constituting a main circuit. Fig. 8B shows, by means of an equivalent circuit, a function of the RB-IGBT at the time of controlling a voltage with respect to each of the first gate terminal G1 and the second gate terminal G2 of this transistor.

As shown in Fig. 8B, in the ON state where the voltage is applied to both gate terminals, the first gate terminal G1 and the second gate terminal G2, or in the OFF state where the voltage is applied to neither of the gate terminals, the bidirectional switching device comes into the switching mode. Further, when the one gate terminal is in the ON state and the other gate terminal is in the OFF state, the bidirectional switching device comes into the diode mode. In the bidirectional switching device shown in Fig. 8A, in a state where the voltage is applied to the first gate terminal G1 and the voltage is not applied to the second gate terminal G2, a terminal S1 becomes an anode side and a terminal S2 becomes a cathode side. Namely, at this time, the bidirectional switching device comes into the diode mode with a direction from the terminal S1 to the terminal S2 being the forward direction. On the other hand, when the voltage is not applied to the first gate terminal G1 and the voltage is applied to the second gate terminal G2, the terminal S1 becomes the cathode side and the terminal S2 becomes the anode side. Namely, at this time, the bidirectional switching device comes into the diode mode with a direction from the terminal S2 to the terminal S1 being the forward direction.

As thus described, in the power conversion apparatus of Example 1 according to the present invention, the waveform generating part is configured by use of the bidirectional switching device having functions of the switching mode between the cut-off state (OFF state) and the bidirectional current-carrying state (bidirectional ON state) and the diode modes for two unidirectional current-carrying state, thereby to allow formation of the three-phase AC having a predetermined frequency from the single-phase AC power supply. Therefore, the power conversion apparatus of Example 1 is a power conversion apparatus having high versatility where control facility and a low loss are realized.

### Example 2

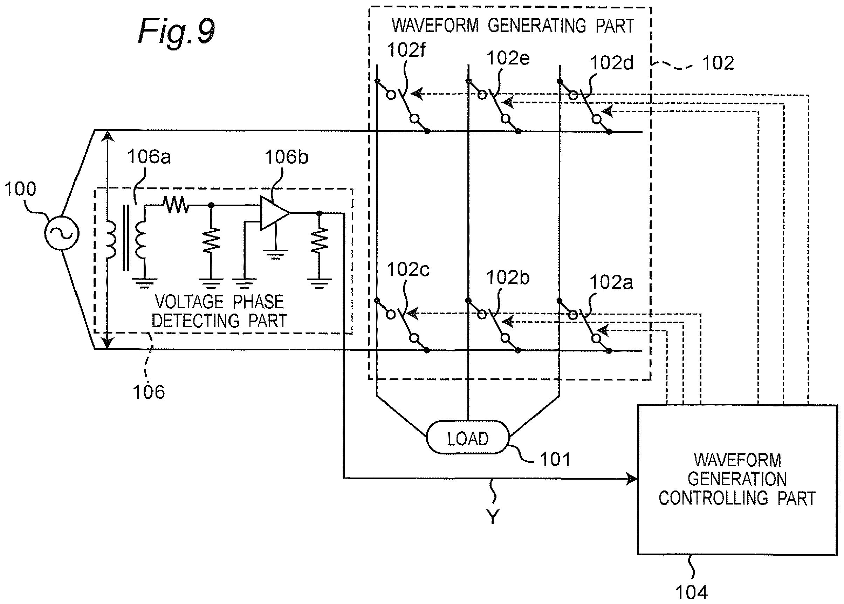

Fig. 9 is a block diagram showing a configuration of a power conversion apparatus of Example 2 helpful to understand the present invention. The power conversion apparatus of Example 2 shows an example of specific configurations of the power supply phase detecting part 103 in the power conversion apparatus of Example 1 described above. In the power conversion apparatus of Example 2, the power supply phase detecting part 103 is configured as a voltage phase detecting part 106 for detecting a voltage phase of the single-phase AC power supply 100. It is to be noted that in the power conversion apparatus of Example 2, constitutional elements having the same functions/configurations as those in the power conversion apparatus of Example 1 described above are provided with the same numerals, and descriptions of those in Example 1 apply to detailed descriptions of the constitutional elements.

As shown in Fig. 9, each connecting portion between the single-phase AC power supply 100 and the three-phase load 101 is provided with bidirectional switching devices 102a, 102b, 102c, 102d, 102e, and 102f, and the six bidirectional switching devices 102a to 102f constitute the waveform generating part 102. The bidirectional switching devices 102a to 102f of the waveform generating part 102 in the power conversion apparatus of Example 2 have the same configurations of those of the bidirectional switching devices (Q1 to Q6) described in Example 1. In the power conversion apparatus of Example 2, the single-phase AC power supply 100, the load 101 and the waveform generating part 102 constitute the main circuit, and the bidirectional switching devices 102a to 102f of the waveform generating part 102 are drive-controlled by the waveform generation controlling part 104.

Further, the single-phase AC power supply 100 is provided with the voltage phase detecting part 106, and this voltage phase detecting part 106 detects the voltage phase of the single-phase AC power supply 100. The voltage phase detecting part 106 transmits the phase detection signal Y to the waveform generation controlling part 104 for performing PWM control on the bidirectional switching devices 102a to 102f in the waveform generating part 102. Here, the phase detection signal Y from the voltage phase detecting part 106 is voltage phase information.

The power conversion apparatus of Example 2 has substantially the same configuration as that of the power conversion apparatus of Example 1 described above. Also in the power conversion apparatus of Example 2, information showing a load state regarding the load 101 (e.g. the number of revolutions, an input current to the motor, a phase current of the motor, an output torque, a position of a rotor, and an angular rate, a voltage, a current, etc.) are detected, to be transmitted to the waveform generation controlling part 104.

An operation in the power conversion apparatus of Example 2 configured as thus described is substantially the same as the operation in the power conversion apparatus of Example 1 described above.

In the power conversion apparatus of Example 2, in order to form the three-phase AC having a predetermined frequency from the single-phase AC of the single-phase AC power supply 100 for supplying the three-phase power to the load 101, the phase of the power supply voltage of the single-phase AC power supply 100 is detected in the voltage phase detecting part 106, to PWM-control each of the bidirectional switching devices 102a to 102f of the waveform generating part 102, so as to generate a pseudo three-phase AC. The generated pseudo three-phase AC is supplied to the load 101, and the load 101 is driven in a designated load state, for example with a predetermined number of revolutions.

As shown in Fig. 9, in the voltage phase detecting part 106 in the power conversion apparatus of Example 2, the voltage of the single-phase AC power supply 100 is inputted into a power supply transformer 106a of the single-phase AC power supply 100, to insulate electricity and reduce the voltage. A voltage signal outputted from the voltage phase detecting part 106a is inputted into an operational amplifier circuit 106b, to be compared with a predetermined voltage (ground voltage in Example 2), and a result of the comparison is outputted as the phase detection signal Y which is the voltage phase information.

The phase detection signal Y outputted from the voltage phase detecting part 106 is inputted into the waveform generation controlling part 104. In the phase detection signal processing part 21 (see Fig. 1) of the waveform generation controlling part 104, the phase detection signal Y is subjected to correction of a timing synchronous delay of the inputted phase detection signal Y by correcting a delay corresponding to an offset which occurs at the time of detecting the voltage phase, a signal delay in the constitutional circuit, and the like.

In the power conversion apparatus of Example 2, configured as thus described, the first and second gate terminals (G1, G2) of each of the bidirectional switching devices are drive-controlled based upon the phase detection signal Y from the voltage phase detecting part 106, the command signal X, and the like. In the power conversion apparatus of Example 2, drive-controlled as above, it is possible to directly convert the single-phase AC to the three-phase AC having a predetermined frequency (three-phase AC corresponding to the command signal X) without through the DC stage.

### Example 3

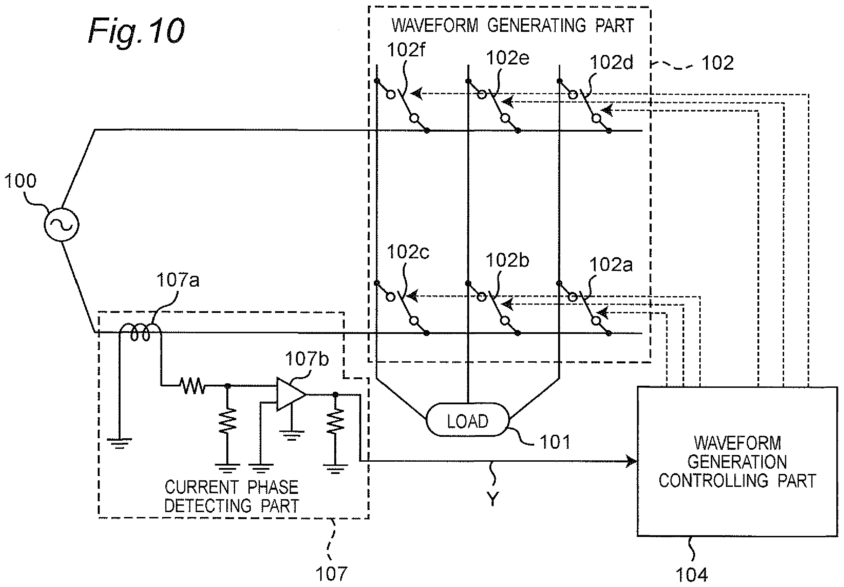

Fig. 10 is a block diagram showing a configuration of a power conversion apparatus of Example 3 according to the present invention. In Example 3, constitutional elements having the same functions/configurations as those in the power conversion apparatuses of Examples 1 and 2 described above are provided with the same numerals, and descriptions of those in the respective examples apply to detailed descriptions of the constitutional elements.

The power conversion apparatus of Example 3 is different from the power conversion apparatus of Example 2 described above in that the voltage phase detecting part 106 for detecting the voltage phase of the single-phase AC power supply 100 is replaced by a current phase detecting part 107 for detecting a current phase of the single-phase AC power supply 100.

As shown in Fig. 10, in the power conversion apparatus of Example 3, the single-phase AC power supply 100, the three-phase load 101 and the waveform generating part 102 constitute the main circuit, and the waveform generating part 102 is drive-controlled by the waveform generation controlling part 104. Therefore, the configuration except for the current phase detecting part 107 is substantially the same as those in Example 1 and Example 2.

In the power conversion apparatus of Example 3, the single-phase AC power supply 100 is provided with the current phase detecting part 107, and the current phase of the single-phase AC power supply 100 is detected by this current phase detecting part 107. The current phase detecting part 107 transmits the phase detection signal Y to the waveform generation controlling part 104 that performs PWM-control on each of the bidirectional switching devices 102a to 102f in the waveform generating part 102. Here, the phase detection signal Y from the current phase detecting part 107 is current phase information.

As shown in Fig. 10, in the current phase detecting part 107 in the power conversion apparatus of Example 3, a current of the single-phase AC power supply 100 is detected in a CT 107a. A signal of the detected current is inputted into an operational amplifier circuit 107b, to be compared with a predetermined voltage (ground voltage in Example 3), and the phase detection signal Y showing a result of the comparison is outputted to the waveform generation controlling part 104.

In the phase detection signal processing part 21 (see Fig. 1) of the waveform generation controlling part 104, the phase detection signal Y outputted from the current phase detecting part 107 is subjected to correction of a timing synchronous delay of the inputted phase detection signal Y by correcting a delay corresponding to an offset which occurs at the time of detecting the voltage phase in the power supply phase detecting part 103, a signal delay in the constitutional circuit, and the like.

As shown in Fig. 10, in the power conversion apparatus of Example 3, the use of the current phase detecting part 107 clarifies the continuity of the current supplied from the single-phase AC power supply 100 to the load 101. Therefore, in the power conversion apparatus of Example 3, it is possible to switch between the switching mode and the diode mode in the waveform generating part 102 at the timing when no current flows through the bidirectional switching devices 102a to 102f. Consequently, the power conversion apparatus of Example 3 can realize highly reliable direct power conversion from the single-phase to the three-phase in a simple and highly efficient manner.

In the power conversion apparatus of Example 3, it is configured such that the current phase from the single-phase AC power supply 100 is detected, to reverse the functional operations of the bidirectional switching devices between the time when the current is in the positive region and the time when the current is in the negative region. Therefore, in the power conversion apparatus of Example 3, a direct matrix converter is configured which directly converts the single-phase AC to the three-phase AC without through the DC stage, thereby to realize control facility and a low loss.

### Embodiment 1

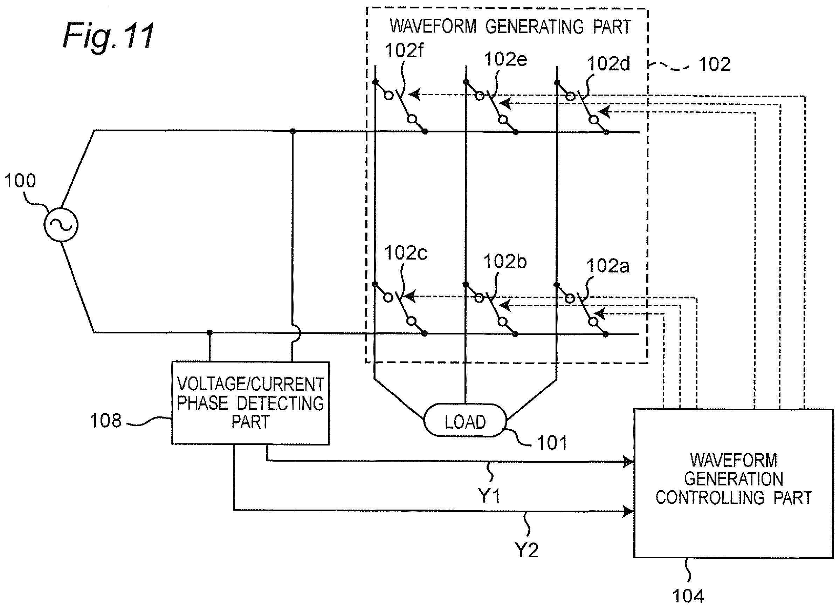

Fig. 11 is a block diagram showing a configuration of a power conversion apparatus of Embodiment 1 according to the present invention. In Embodiment 1, constitutional elements having the same functions/configurations as those in the power conversion apparatuses of Examples 1 to 3 described above are provided with the same numerals, and descriptions of those in the respective examples apply to detailed descriptions of the constitutional elements.

The power conversion apparatus of Embodiment 1 is different from the power conversion apparatus of Example 1 described above in that, in place of the power supply phase detecting part 103 for detecting the power supply phase of the single-phase AC power supply 100, a voltage/current phase detecting part 108 is provided for outputting a voltage phase detection signal Y1 that shows the detected power supply voltage phase and a current phase detection signal Y2 that shows the detected power supply current phase. Here, the voltage phase detection signal Y1 from the voltage/current phase detecting part 108 is the voltage phase information and the current phase detection signal Y2 therefrom is the current phase information.

In the case of the load 101 being the resistance load, a load power factor is almost one, and there is no difference between the voltage phase and the current phase, allowing either the voltage or the current to be an object for detection of the power supply phase without a problem. However, in the case of the load being the resistance load but a light load, the configuration of the power conversion apparatus of Example 2 described above where the voltage phase is the object for detection is preferred. This is because, since a current value is small in the case of the light load, when the phase of this current is defined as the object for detection, a malfunction might occur in the current detection system due to noise or the like. When the voltage phase is defined as the object for detection, malfunctions occur in small number in the voltage detection system since the voltage is constant, thereby enabling detection with high accuracy.

Further, in the case of the load 101 being the resistance load but a heavy load, the configuration of the power conversion apparatus of Example 3 described above where the current phase is the object for detection is preferred. This is because, since the current value is large in the case of the heavy load, a resolution of the current detection system can be sufficiently ensured.

On the other hand, in the case of the load 101 being a large-capacity induction load, for example, a large-sized induction motor, a large deviation occurs between the voltage phase and the current phase.

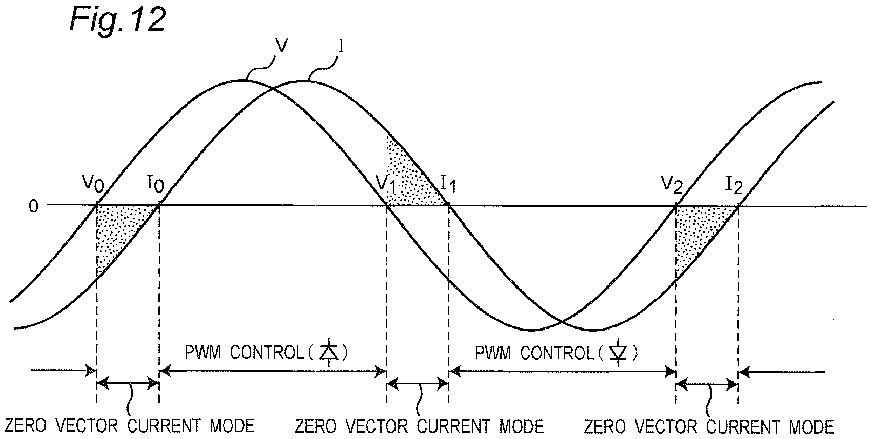

Fig. 12 is a waveform diagram showing an example of each of a voltage waveform V and a current waveform I which are inputted from the single-phase AC power supply 100. As shown in Fig. 12, the current phase is delayed as compared with the voltage phase. Therefore, for example during a period between a zero crossing point V₀ at which the voltage waveform V crosses the zero level and a zero crossing point I₀ at which the current waveform I crosses the zero level, the voltage is in the positive region and the current is in the negative region, and the voltage and the current are in the different regions. As a result of this, when the bidirectional switching device is switching-operated at the zero crossing point V₀ of the voltage waveform V as shown in foregoing Figs. 5A and 5B, the power supply might be short-circuited to generate an excess surge voltage during a certain period.

In order to solve this problem, in the power conversion apparatus of Embodiment 1, during a period when the voltage and the current are in the different regions (positive region and negative region), the bidirectional switching device of the waveform generating part 102 is drive-controlled so as to be in a later-mentioned zero-vector current mode. The zero-vector current mode is a circulation mode for drive-controlling the bidirectional switching device so as to return a motor current to the motor side during a period from passage of the power supply voltage over the zero crossing point to passage of the power supply current over the zero crossing point since the motor current having flown up to then continues to flow in the circuit. An example of specific operations in the zero-vector current mode is as follows.

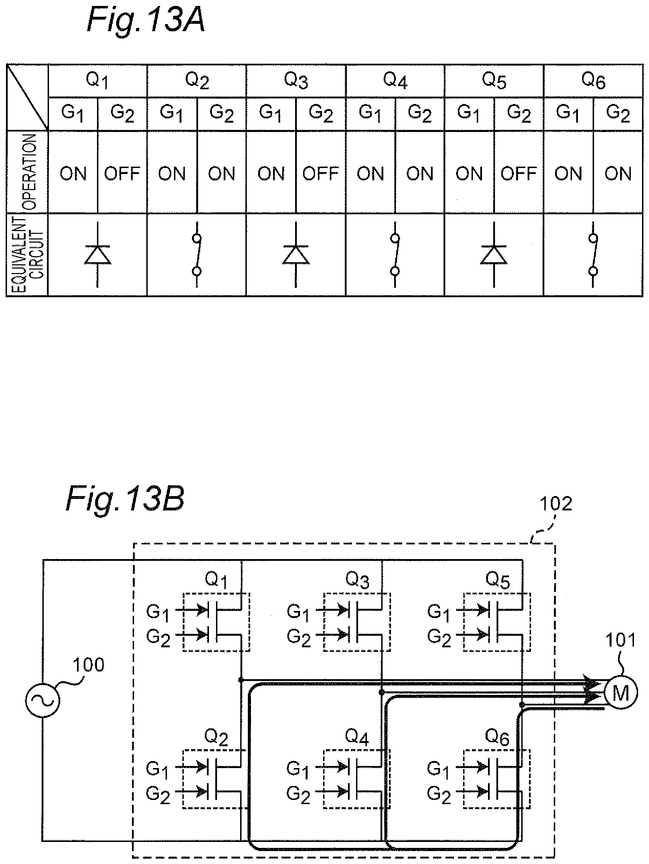

Fig. 13A shows an applied state (ON/OFF state) of a voltage to each of the gate terminals (G1, G2) of each of the bidirectional switching devices (Q1 to Q6) in the zero-vector current mode. Fig. 13B shows a current flow in each of the bidirectional switching devices (Q1 to Q6) in the waveform generating part 102 in the operating state shown in Fig. 13A.

In the states shown in Figs. 13A and 13B, the first, third and fifth bidirectional switching devices Q1, Q3, Q5 are in the diode mode, and the second, fourth and fifth bidirectional switching devices Q2, Q4, Q6 are in the state where the switching mode is ON. In this state, a current from the motor as the induction load flows in a direction of arrows shown in Fig. 13B, and circulated into the motor (zero-vector current mode).

As thus described, in the power conversion apparatus of Embodiment 1, during a period when the voltage and the current are in the different regions (positive region and negative region) (e.g. V₀-I₀ period, V₁-I₁ period, V₂-I₂ period in Fig. 12), the bidirectional switching device is drive-controlled in the zero-vector current mode in which a current flowing from an immediately previous motor is circulated into the motor. During a period when the voltage and the current are in the same region (positive region or negative region), namely in the voltage waveform V and the current waveform I shown in Fig. 12, normal PWM-control is performed during an I₀-V₁ period and an I₁-V₂ period.

Therefore, in the power conversion apparatus of Embodiment 1, it is configured such that the voltage/current phase detecting part 108 is provided for detecting the respective phases of the voltage and the current of the single-phase AC power supply 100, and the voltage phase detection signal Y1 and the current phase detection signal Y2 are outputted from the voltage/current phase detecting part 108 to the waveform generation controlling part 104. It is configured such that the waveform generation controlling part 104, into which the voltage phase detection signal Y1 and the current phase detection signal Y2 have been inputted, switches between the PWM-control and the zero-vector current mode during the above-mentioned predetermined period so as to drive-control each bidirectional switching device.

In the power conversion apparatus of Embodiment 1 as thus configured, even when a large deviation has occurred between the voltage phase and the current phase in the case of the three-phase load 101 being a large-capacity induction load or some other case, it is possible to highly reliably generate a three-phase current having a predetermined frequency from the single-phase AC of the single-phase AC power supply 100 without through the DC stage.

In the power conversion apparatus of the present invention, as the bidirectional switching device having the functions of at least the cut-off state (OFF state), the bidirectional conducting mode (bidirectional ON state), the two unidirectional current-carrying states (diode mode states) as the operation modes, for example, a GaN multi-gate bidirectional transistor is used. It is possible to form the power conversion apparatus of the present invention by use of the bidirectional switching device having a conventional configuration shown in Figs. 15 and 16 where the transistor and the diode are combined with each other. However, there has been a problem as follows with such a configuration where the transistor and the diode are combined. Since a current is carried constantly with the transistor and the transistor in a serially connected state, a current-carrying loss is large, and further, the size of the apparatus increases due to the need for combining each element for constructing the apparatus, thereby requiring a large number of connecting means. In a configuration using the GaN multi-gate bidirectional transistor shown in Fig. 2 and the RB-IGBT shown in Fig. 8A, the transistor and the diode are not combined, but the transistor is used by itself, and hence such a problem as described above has been resolved.

As shown in Fig. 4, the waveform generating part in the power conversion apparatus of the present invention is configured such that the connection between the single-phase AC power supply and the three-phase load is formed of three pairs of half-bridges. The power conversion apparatus of the present invention alternatively executes a switching operation as shown in Fig. 5A or 5B based upon the phase detection signal Y from the power supply phase detecting part for detecting the power supply phase of the single-phase AC power supply. Therefore, the six bidirectional switching devices are configured so as to be drive-controlled in accordance with an input waveform state of the single-phase AC power supply, for example in accordance with a voltage magnitude relation between the output terminals (two power supply lines) from the single-phase AC power supply. Namely, in the waveform generation controlling part in the power conversion apparatus of the present invention, the waveform controlling part is drive-controlled based upon power supply phase information showing the voltage magnitude relation between the power supply lines from the power supply phase detecting part.

Specifically, an ON signal is applied to between a first gate and a first source of the bidirectional switching device such that on the power supply lines, the anode side of the bidirectional switching device in the diode mode is connected to the terminal with a lower voltage and the cathode side of the bidirectional switching device in the diode mode is connected to the terminal with a higher voltage. Further, when the voltage phase of the single-phase AC power supply 100 is inverted, an ON signal is applied to between a second gate and a second source of the bidirectional switching device so as to bring the circuit into just a turned-over state. At this time, the voltage that is applied to each of the other gate terminals is controlled to perform an ON/OFF operation of the bidirectional switching device, so as to realize PWM control for the three-phase load in the power conversion apparatus of the present invention.

It is to be noted that, although the case of the load being the three-phase was described in each of the foregoing embodiments, the present invention does not restrict the load to the three phase, and applying a similar technical characteristic of connecting the power supply line of the single-phase AC power supply and the output line to the multi-phase AC load through the bidirectional switching device can generate the multi-phase AC from the single-phase AC power supply without through the DC stage.

In the case of using a load having an inductance component, including a motor load, it is necessary to process in some way regenerated energy generated due to the inductance component of the load. Normally, this regenerated energy processing is performed by regenerating the energy to a power supply circuit or a large-capacity flat capacitor through a flywheel diode provided in each transistor in parallel therewith. In the power conversion apparatus of the present invention, since the use of the bidirectional switching device enables formation of the switching mode or the diode mode, the bidirectional switching device has a function as the flywheel diode depending upon the situation. Therefore, in the present invention, it is configured that the regenerated energy generated in the case of using the load having the inductance component can be regenerated to the power supply circuit.

As thus described, by the use of the bidirectional switching device showing the respective functions of at least the cut-off state (OFF state), the bidirectional current-carrying state (bidirectional ON state), and two unidirectional current-carrying states as operation modes of the waveform generating part in the power conversion apparatus of the present invention, it is possible to configure the flywheel diode for the regenerated energy processing based upon phase information of the single-phase AC power supply, so as to realize a highly reliable power conversion circuit in a simple and highly efficient manner.

In the power conversion apparatus, as described in Example 3, a current phase detecting means is provided in place of the voltage phase detecting means for the purpose of detecting the phase of the single-phase AC power supply, thereby to clarify the continuity of the current supplied from the power source to the load, and it is hence possible to perform mode-switching of the bidirectional switching device at the timing when no current flows. This can allow the power conversion apparatus according to the present invention to realize a further reliable power conversion circuit from the single-phase AC to the multi-phase AC in a simple and highly efficient manner.

Moreover, in the power conversion apparatus of the present invention, as described in Embodiment 1, a voltage/current phase detecting means having the function with the voltage phase detecting means and the current phase detecting means in combination is provided for the purpose of detecting the phase of the single-phase AC power supply, whereby it is possible to highly reliably generate the multi-phase current having a predetermined frequency even in the case of the load being a large-capacity induction load.

In the power conversion apparatus of the present invention, the waveform generating part is configured by use of the bidirectional switching device having functions of the switching mode between the cut-off state (OFF state) and the bidirectional current-carrying state (bidirectional ON state) and the diode modes for two unidirectional current-carrying state, thereby to allow formation of the three-phase AC having a predetermined frequency from the single-phase AC power supply, whereby it is possible to form the multi-phase AC having a predetermined frequency from the single-phase AC, so as to realize control facility and a low loss.

### INDUSTRIAL APPLICABILITY

A power conversion apparatus of the present invention is useful as a highly reliable power supply apparatus capable of converting a power from a single-phase AC to a multi-phase AC without through a DC stage in a simple and a highly efficient manner, and can be applied with versatility as a power supply apparatus in a variety of home appliances having a multi-phase motor with a relatively large power, such as an air conditioner, a heat-pump hot-water heater and a refrigerator.

## Claims

1. A power conversion apparatus, comprising:
a power supply phase detecting part (103, 108) for detecting a voltage phase and a current phase of a single-phase alternate current (AC) power supply (100), to output information on the detected voltage phase and the detected current phase as power supply phase information;
a waveform generating part (102), having a plurality of bidirectional switching devices (Q1 - Q6) and configured by connection of a power supply line of the single-phase AC power supply (100) and an output line to a multi-phase load (101) through the bidirectional switching device; and
a waveform generation controlling part (104) for drive-controlling the bidirectional switching device based upon the power supply phase information from the power supply phase detecting part (103, 108), and also PWM-controlling the bidirectional switching device based upon a previously set command signal, to make a multi-phase AC with a predetermined frequency outputted from the waveform generating part (102);
wherein the waveform generation controlling part (104) is configured to drive-control the bidirectional switching device to a mode for circulating a current from the multi-phase AC load into the multi-phase AC load based upon the power supply phase information from the power supply phase detecting part (103, 108) during a period of positive and negative regions being different between a power supply voltage waveform and a power supply current waveform.

2. The power conversion apparatus according to claim 1, wherein
the bidirectional switching device has, as operational modes, a switching mode for switching between a cut-off state and a bidirectional current-carrying state, and a diode mode for leading to a unidirectional current-carrying state in each of two directions, and
the waveform generation controlling part alternatively switches between the switching mode and the diode mode of the bidirectional switching device based upon the power supply phase information from the power supply phase detecting part.

3. The power conversion apparatus according to claim 1, wherein
the bidirectional switching device has at least two control terminals, and
the waveform generation controlling part detects a zero crossing point of a positive region and a negative region in a power supply waveform based upon the power supply phase information from the power supply phase detecting part, and switches respective control signals that are inputted into the two control terminals at the detected zero crossing point.

4. The power conversion apparatus according to claim 2, wherein the waveform generation controlling part detects a zero crossing point of a positive region and a negative region in a power supply waveform based upon the power supply phase information from the power supply phase detecting part, and switches a current-carrying direction of the diode mode of the bidirectional switching device at the detected zero crossing point.

5. The power conversion apparatus according to claim 1, wherein the waveform generation controlling part PWM-controls the bidirectional switching device based upon the voltage phase information and the current phase information from the power supply phase detecting part during a period of positive and negative regions being the same between a power supply voltage waveform and a power supply current waveform.

6. The power conversion apparatus according to claim 1, wherein the bidirectional switching device is configured by parallel connection of SiC lateral bidirectional switch transistors, GaN lateral bidirectional switch transistors, or RB-IGBTs (Reverse Blocking Insulated Gate Bipolar Transistors) in a reverse direction.

## Patentansprüche

1. Leistungsumwandlungsvorrichtung, Folgendes umfassend:
ein Phasenerfassungsteil für die Stromzufuhr (103, 108) zum Erfassen einer Spannungsphase und einer Stromphase von einer einphasigen Wechselstromzufuhr (AC) (100), um Informationen über die erfasste Spannungsphase und die erfasste Stromphase als Stromzufuhrphaseninformationen auszugeben;
ein Wellenform-Erzeugungsteil (102) mit einer Vielzahl von bidirektionalen Schaltvorrichtungen (Q1 - Q6) und konfiguriert durch das Verbinden einer Stromzufuhrleitung der einphasigen Wechselstromzufuhr (100) und einer Ausgangsleitung zu einer mehrphasigen Last (101) durch die bidirektionale Schaltvorrichtung; und
ein Wellenform-Erzeugungs-Steuerteil (104) für die Antriebssteuerung der bidirektionalen Schaltvorrichtung, basierend auf den Stromzufuhrphaseninformationen von dem Phasenerfassungsteil für die Stromzufuhr (103, 108), und auch zum Steuern der bidirektionalen Schaltvorrichtung durch Pulsweitenmodulation PWM, basierend auf einem zuvor eingestellten Befehlssignal, um einen mehrphasigen Wechselstrom mit einer vorbestimmten Frequenz zu erzeugen, ausgegeben von dem Wellenform-Erzeugungsteil (102);
wobei das Wellenform-Erzeugungs-Steuerteil (104) konfiguriert ist für die Antriebssteuerung der bidirektionale Schaltvorrichtung auf einen Modus zum Fließen eines Stroms von der mehrphasigen Wechselstromlast in die mehrphasige Wechselstromlast, die auf den Stromzufuhrphaseninformationen von dem Phasenerfassungsteil für die Stromzufuhr (103, 108) basiert, während einer Periode von positiven und negativen Bereichen, die sich zwischen einer Spannungswellenform der Stromzufuhr und einer Stromwellenform der Stromzufuhr unterscheiden.

2. Leistungsumwandlungsvorrichtung nach Anspruch 1, wobei
die bidirektionale Schaltvorrichtung als Betriebsarten einen Schaltmodus zum Umschalten zwischen einem Abschaltzustand und einem bidirektional stromführenden Zustand aufweist, sowie einen Diodenmodus aufweist, um zu einem in jeder der zwei Richtungen unidirektional stromführenden Zustand zu führen, und
das Wellenform-Erzeugungs-Steuerteil abwechselnd zwischen dem Schaltmodus und dem Diodenmodus der bidirektionalen Schaltvorrichtung wechselt, basierend auf den Stromzufuhrphaseninformationen von dem Phasenerfassungsteil für die Stromzufuhr.

3. Leistungsumwandlungsvorrichtung nach Anspruch 1, wobei
die bidirektionale Schaltvorrichtung mindestens zwei Steueranschlüsse aufweist, und
das Wellenform-Erzeugungs-Steuerteil einen Nulldurchgangspunkt von einem positiven Bereich und einem negativen Bereich in einer Wellenform des zugeführten Stroms erfasst, basierend auf den Stromzufuhrphaseninformationen von dem Phasenerfassungsteil für die Stromzufuhr, und entsprechende Steuersignale schaltet, die in die zwei Steueranschlüsse an dem erfassten Nulldurchgangspunkt eingegeben werden.

4. Leistungsumwandlungsvorrichtung nach Anspruch 2, wobei das Wellenform-Erzeugungs-Steuerteil einen Nulldurchgangspunkt von einem positiven Bereich und einem negativen Bereich in einer Wellenform des zugeführten Stroms erfasst, basierend auf den Stromzufuhrphaseninformationen von dem Phasenerfassungsteil für die Stromzufuhr, und eine Stromlastrichtung des Diodenmodus der bidirektionalen Schaltvorrichtung an dem erfassten Nulldurchgangspunkt schaltet.

5. Leistungsumwandlungsvorrichtung nach Anspruch 1, wobei das Wellenform-Erzeugungs-Steuerteil die bidirektionale Schaltvorrichtung, basierend auf den Spannungsphaseninformationen und den Stromphaseninformationen aus dem Phasenerfassungsteil für die Stromzufuhr, durch PWM ansteuert, während einer Periode von positiven und negativen Bereichen, die sich zwischen einer Spannungswellenform der Stromzufuhr und einer Stromwellenform der Stromzufuhr gleichen.

6. Leistungsumwandlungsvorrichtung nach Anspruch 1, wobei die bidirektionale Schaltvorrichtung konfiguriert ist durch Parallelschaltung von SiC lateralen Zweirichtungsschalter-Transistoren, GaN lateralen Zweirichtungsschalter-Transistoren oder RB-IGBTs (Reverse Blocking Insulated Gate Bipolar Transistors) in einer umgekehrten Richtung.

## Revendications

1. Appareil de conversion d'alimentation, comprenant :
une partie de détection de phase d'alimentation (103, 108) destinée à détecter une phase de tension et une phase de courant d'une alimentation électrique à courant alternatif (CA) monophasée (100), pour fournir en sortie des informations sur la phase de tension détectée et la phase de courant détectée en tant qu'informations de phase d'alimentation électrique ;
une partie de génération de forme d'onde (102), ayant une pluralité de dispositifs de commutation bidirectionnelle (Q1 à Q6) et configurée par connexion d'une ligne d'alimentation électrique de l'alimentation électrique CA monophasée (100) et d'une ligne de sortie à une charge multiphasée (101) par le biais du dispositif de commutation bidirectionnelle ; et
une partie de commande de génération de forme d'onde (104) destinée à commander par pilotage le dispositif de commutation bidirectionnelle sur la base des informations de phase d'alimentation électrique issues de la partie de détection de phase d'alimentation électrique (103, 108), et également à commander par PWM le dispositif de commutation bidirectionnelle sur la base d'un signal d'ordre fixé au préalable, pour amener un CA multiphasé avec une fréquence prédéterminée à être fourni en sortie par la partie de génération de forme d'onde (102) ;
dans lequel la partie de commande de génération de forme d'onde (104) est configurée pour commander par pilotage le dispositif de commutation bidirectionnelle à un mode permettant de faire circuler un courant depuis la charge CA multiphasée dans la charge CA multiphasée sur la base des informations de phase d'alimentation électrique issues de la partie de détection de phase d'alimentation électrique (103, 108) pendant une période de régions positive et négative qui sont différentes entre une forme d'onde de tension d'alimentation électrique et une forme d'onde de courant d'alimentation électrique.

2. Appareil de conversion d'alimentation selon la revendication 1, dans lequel
le dispositif de commutation bidirectionnelle a, en tant que modes opérationnels, un mode de commutation pour commuter entre un état de coupure et un état porteur de courant bidirectionnel, et un mode diode pour mener à un état porteur de courant unidirectionnel dans chacune des deux directions, et
la partie de commande de génération de forme d'onde commute en alternance entre le mode de commutation et le mode diode du dispositif de commutation bidirectionnelle sur la base des informations de phase d'alimentation électrique issues de la partie de détection de phase d'alimentation électrique.

3. Appareil de conversion d'alimentation selon la revendication 1, dans lequel
le dispositif de commutation bidirectionnelle comporte au moins deux bornes de commande, et
la partie de commande de génération de forme d'onde détecte un point de passage par zéro d'une région positive et une région négative dans une forme d'onde d'alimentation électrique sur la base des informations de phase d'alimentation électrique issues de la partie de détection de phase d'alimentation électrique, et commute des signaux de commande respectifs qui sont fournis en entrée dans les deux bornes de commande au point de passage par zéro détecté.

4. Appareil de conversion d'alimentation selon la revendication 2, dans lequel la partie de commande de génération de forme d'onde détecte un point de passage par zéro d'une région positive et d'une région négative dans une forme d'onde d'alimentation électrique sur la base des informations de phase d'alimentation électrique issues de la partie de détection de phase d'alimentation électrique, et commute une direction porteuse de courant du mode diode du dispositif de commutation bidirectionnelle au niveau du point de passage par zéro détecté.

5. Appareil de conversion d'alimentation selon la revendication 1, dans lequel la partie de commande de génération de forme d'onde commande par PWM le dispositif de commutation bidirectionnelle sur la base des informations de phase de tension et des informations de phase de courant issues de la partie de détection de phase d'alimentation électrique pendant une période de régions positive et négative qui sont les mêmes entre une forme d'onde de tension d'alimentation électrique et une forme d'onde de courant d'alimentation électrique.

6. Appareil de conversion d'alimentation selon la revendication 1, dans lequel le dispositif de commutation bidirectionnelle est configuré par une connexion parallèle de transistors à commutateur bidirectionnel latéral SiC, des transistors à commutateur bidirectionnel latéral GaN, ou des RB-IGBT (transistors bipolaires à grille isolée bloqués en inverse) dans une direction inverse.
